# EUROPÄISCHE PATENTANMELDUNG

(11) **EP 2 377 644 A1**
(43) Veröffentlichungstag der Anmeldung: **19.10.2011**
(21) Anmeldenummer: 11003239.8
(22) Anmeldetag: 18.04.2011
(51) Int. Cl.: B23Q 1/28, F16C 29/10

(54) **Klemmvorrichtung für Führungsschienen oder Führungsstangen**

(30) Priorität: 16.04.2010 DE 102010015482
(71) Anmelder: HEMA Maschinen- und Apparateschutz GmbH, 63500 Seligenstadt (DE)
(72) Erfinder: Loster, Dietmar, 63920 Großheubach (DE); Rachor, Bernd, 63843 Niedernberg (DE); Lang, Klaus, 63934 Röllbach (DE)
(74) Vertreter: Tergau & Walkenhorst

(57) **Zusammenfassung**

Eine Klemmvorrichtung für Führungsschienen oder Führungsstangen mit einem im wesentlichen H-förmigen Grundkörper, dessen im wesentlichen parallele Schenkel durch einen flexiblen Mittelsteg verbunden sind, wobei die zu einer ersten Seite des Mittelstegs ausgerichteten unteren Schenkel zur unmittelbaren oder mittelbaren Einleitung einer Brems- oder Klemmkraft an der Führungsschiene ausgelegt sind, soll bei möglichst einfachster, robuster und kompaktgehaltener Bauweise eine sichere Klemmung, Fixierung und Bremsung von Werkstücken oder Werkzeugen ermöglichen. Dazu verfügt einer der auf der entgegengesetzten zweiten Seite des Mittelstegs ausgerichteten oberen Schenkel über wenigstens eine Gewindebohrung, in die je eine Gewindespindel eingreift. Darüber hinaus ist die Gewindespindel in einer Ausnehmung des gegenüberliegenden, oberen Schenkels drehbar gelagert.

## Beschreibung

Die Erfindung bezieht sich auf eine Klemmvorrichtung für Führungsschienen oder Führungsstangen mit einem im wesentlichen H-förmigen Grundkörper, dessen im wesentlichen parallele Schenkel durch einen flexiblen Mittelsteg verbunden sind, wobei die zu einer ersten Seite des Mittelstegs ausgerichteten unteren Schenkel zur unmittelbaren oder mittelbaren Einleitung einer Brems- oder Klemmkraft an der Führungsschiene ausgelegt sind.

Klemm- und/oder Bremsvorrichtungen kommen in vielen Bereichen der Technik zum Einsatz. Dabei werden sie zum punktgenauen Fixieren von Werkzeugen oder Werkstücken an einer Linearführungsschiene aber auch beim Schutz vor ungewolltem Herabfallen oder Gleiten entlang einer solchen Schiene gleichermaßen genutzt.

Allerdings ist bei einfachen Klemmaufgaben an manuell bedienbaren Maschinen, bei welchen es nicht auf eine hohe Positioniergenauigkeit ankommt, der Einsatz von pneumatischen, hydraulischen oder elektrischen Klemmelementen in der Regel unnötig aufwendig und teuer. Beispielsweise als Transportsicherungen können zwar passiv wirkende Klemmelemente eingesetzt werden, weil im geklemmten Zustand keine Energie benötigt wird. Dies bedeutet jedoch nicht nur den Einsatz von hierfür viel zu aufwendigen und teuren Bauteilen, sondern erhöht gleichzeitig auch den Dokumentationsaufwand, weil der Empfänger sehr genau instruiert werden muss, welche Elemente er wann, in welcher Reihenfolge, wie und mit welcher Energie (z.B. Druck) versorgen muss, sowie welche sonstigen Vorsichtsmaßnahmen zu treffen sind, um die Transportsicherung zu entfernen.

Klemmvorrichtungen der eingangs genannten Art mit einem H-förmigen Grundkörper sind beispielsweise aus der EP 0 834 380 A1 bekannt. Dabei wird der H-förmige Grundkörper unter Wärmeeinfluss derart verformt, dass die Schenkel auseinandergebogen bzw. zusammengezogen werden und sich daraus die resultierende Klemmkraft bildet. Nachteilig ist hierbei, dass eine entsprechende auf das Material abgestimmte und genau definierte thermische Energie bereitgestellt werden muss und angesichts der geringen Volumenänderungen des Metalls die Klemmvorrichtung innerhalb sehr enger Toleranzen gefertigt werden muss.

Eine weitere im Wesentlichen mechanische Klemmvorrichtung mit einem H-förmigen Grundkörper ist aus der Druckschrift DE 10 2004 053 390 A1 bekannt. Auch dort werden mittels Kraftübertragung die Schenkel auseinandergebogen bzw. zusammengezogen, wodurch eine resultierende Klemmkraft erzeugt wird. Für die Kraftübertragung ist dabei ein Spannelement in Form eines flachen, leicht gebogenen Blechstreifens vorgesehen, welches durch ein senkrecht auf das Spannelement wirkendes Betätigungselement belastet wird und somit die Kraft auf die oberen Schenkel des H-förmigen Grundkörpers überträgt. Nachteilig bei dieser Ausführungsform ist zum einen die Belastung eines flachen Blechstreifens, welcher sich im Betrieb leicht verformen kann und somit eine hohe Verschleißquelle beinhaltet. Zum anderen wird aber auch eine kompakte Bauweise durch ein über dem Spannkörper und damit außerhalb des H-förmigen Grundkörpers angeordnetes Betätigungselement erheblich erschwert. Gerade eine kompakte Bauweise ist aber insbesondere bei Klemmvorrichtungen wünschenswert.

Der Erfindung liegt daher die Aufgabe zugrunde, eine Klemmvorrichtung für Führungsschienen oder Führungsstangen der oben genannten Art anzugeben, welche bei möglichst einfachster, robuster und kompaktgehaltener Bauweise eine manuell auslösbare und sichere Klemmung, Fixierung und Bremsung von Werkstücken, Werkzeugen, Maschienenteilen oder -schlitten ermöglicht.

Diese Aufgabe wird erfindungsgemäß gelöst, indem einer der auf der entgegengesetzten zweiten Seite des Mittelstegs ausgerichteten oberen Schenkel über wenigstens eine Gewindebohrung verfügt, in die je eine Gewindespindel eingreift und indem die Gewindespindel in einer Ausnehmung des gegenüberliegenden, oberen Schenkels drehbar gelagert ist.

Die Erfindung geht von der Überlegung aus, dass eine kompakte Bauweise erzielt werden könnte, wenn abgesehen von einem externen, die Klemmkraft auslösenden Antrieb, die kräfteübertragenden Bauelemente vollständig zwischen zwei Schenkeln angeordnet sind. Dabei sind die Schenkel in einem H-förmigen Grundkörper von Vorteil, welche auf der entgegengesetzten Seite von den Schenkeln liegen, welche die Klemmung durchführen. Des Weiteren soll durch konsequenten Verzicht auf dünnwandige oder thermisch veränderbare Materialien eine möglichst robuste und gegen Verschleiß sichere Klemmvorrichtung erreicht werden. Aus diesem Grund wird zur Kraftübertragung auf eine Anzahl von Gewindespindeln zurückgegriffen, welche in ihnen zugeordneten, einen Schenkel durchdringenden Gewindebohrungen eingreifen. Zur Abstützung der Gewindespindel, ist diese in einer Ausnehmung des gegenüberliegenden Schenkels drehbar gelagert. Durch dieses eingreifen einer Gewindespindel in eine Gewindebohrung der Schenkel wird daher auf besonders einfache Art und Weise eine Transformation der Drehbewegung der Gewindespindel in eine Bewegung parallel zur Längsachse der Gewindespindel erzeugt.

Für eine schnelle Klemmwirkung und eine optimale Übersetzung der Kraft von der drehbar gelagerten Gewindespindel auf die Schenkel, sind in bevorzugter Ausführungsform die Gewindeprofile der Gewindebohrung und der Gewindespindel derart ausgelegt, dass eine Kraftverstärkung erzielt werden kann. Damit wird erreicht, dass eine leichte und kleine Drehbewegung für eine genügend große entgegengesetzte Bewegung der beiden Schenkel ausreicht. Damit lässt sich die Klemmkraft besonders schnell und einfach erzeugen.

Für ein einfaches manuelles Auslösen der Klemmkraft verfügt in vorteilhafter Ausführung die Klemmvorrichtung über einen manuell betätigbaren mechanischen Antrieb, der derart mit der Gewindespindel verbunden ist, dass eine Drehbewegung des Antriebs auf die Gewindespindel übertragen wird. Dieser mechanische Antrieb kann beispielsweise in Form eines Hebels, Sternengriffs oder sonstiger Art ausgeführt sein. In besonders vorteilhafter Ausführung wird die Gewindespindel mittels eines elektro-motorischen, pneumatischen oder hydraulischen Antriebs gedreht.

Die mit der Erfindung erzielten Vorteile bestehen insbesondere darin, dass durch die Kombination einer Gewindespindel mit einer Gewindebohrung auf einfachste Art und Weise eine Kraftübertragung von einem externen Antrieb auf die Schenkel, die zu einer Aufweitung der Schenkel und damit Auslösung der Bremskraft führt, erreicht wird. Durch die Anordnung der kraftübertragenden Elemente innerhalb zweier Schenkel und durch die konsequente Verwendung von stabilen aber auch einfachen Bauteilen ist eine besonders kompakte und robuste Bauweise möglich. Diese ermöglicht es Klemmvorrichtungen für kleinste Führungsschienen sicher und kostengünstig bereitzustellen.

Ein Ausführungsbeispiel der Erfindung wird anhand einer Zeichnung näher erläutert. Darin zeigen:
Fig. 1 eine aktiv ausgebildete Klemmvorrichtung,
Fig. 2 eine Klemmvorrichtung an einer linearen Führungsschiene,
Fig. 3 eine passiv ausgebildete Klemmvorrichtung,
Fig. 4 eine passiv ausgebildete Klemmvorrichtung mit integriertem Federelement.

Gleiche Teile sind in allen Figuren mit denselben Bezugszeichen versehen.

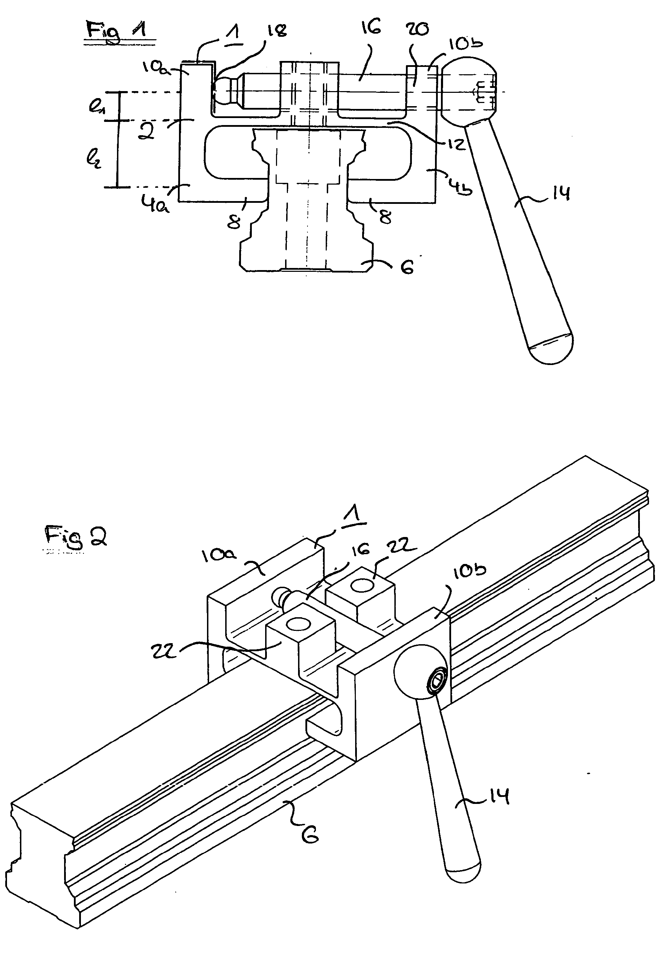

Die Klemmvorrichtung 1 nach Fig. 1 verfügt über einen im Wesentlichen H-förmigen Grundkörper 2, dessen untere Schenkel 4a, 4b eine lineare Führungsschiene 6 umgreifen. Diese lineare Führungsschiene lässt sich aber auch durch eine Führungstange ersetzen. Die unteren Schenkeln 4a, 4b verfügen über Klemm- bzw. Bremsbeläge 8, die im Klemm- bzw. Bremsfall in reibschlüssigen Kontakt mit der Führungsschiene 6 treten, wodurch eine Bremsung bzw. Klemmung des der Klemmvorrichtung 1 zugeordneten, nicht dargestellten Werkstückes bzw. Werkzeuges erfolgt.

Die Klemmbewegung wird dabei durch eine Bewegung der oberen Schenkel 10a, 10b, welche auf der gegenüberliegenden Seite des ausreichend flexiblen Mittelsteges 12 angeordnet sind, eingeleitet. Dieser Mittelsteg 12 ist dabei derart konstruiert, dass er bei Einleitung der Kraft als Rückstellfeder fungiert. Durch die Flexibilität des Mittelsteges 12 führt einer Bewegung der beiden oberen Schenkel 10a, 10b voneinander weg, zu einer Bewegung der beiden unteren Schenkel 4a, 4b zueinander hin und damit in Richtung der Führungsschiene 6. Die Bewegung der oberen Schenkel 10a, 10b wird dabei durch die Drehbewegung eines Antriebs ausgelöst. In Fig. 1 ist dazu beispielsweise ein Hebel 14 vorgesehen, jeder andere mögliche Antrieb, beispielsweise ein elektro-motorischer, pneumatischer oder hydraulischer Antrieb, ist allerdings ebenfalls denkbar.

Der Hebel 14 ist dazu mit einer Gewindespindel 16 verbunden, die endseitig in einer Ausnehmung 18 eines oberen Schenkels 10a gelagert ist. Die Gewindespindel 16 wird des Weiteren durch eine Gewindebohrung 20 des gegenüberliegenden, oberen Schenkels 10b geführt. Eine Drehbewegung des Hebels 14 und eine damit gekoppelte Drehbewegung der Gewindespindel 16 wird durch das Gewindeprofil der Gewindebohrung 20 am zweiten oberen Schenkel 10b in eine axiale, d.h. parallel zur Längsachse der Gewindespindel 16, Bewegung der Gewindespindel 16 umgewandelt. Durch die Lagerung der Gewindespindel 16 in der Ausnehmung 18 im ersten oberen Schenkel 10a, erzeugt die axiale Bewegung der Gewindespindel 16 eine Kraft auf die beiden oberen Schenkel 10a, 10b. Durch diesen Krafteinfluss werden die beiden oberen Schenkel 10a, 10b auseinander und die Klemm- bzw. Bremsbeläge 8 der unteren Schenkel 4a, 4b entsprechend gegen die Führungsschiene 6 gedrückt. Die Klemmvorrichtung 1 und die ihnen zugeordneten Werkzeuge bzw. Werkstücke werden somit an der Führungsschiene 6 fixiert.

Die konkrete Ausgestaltung der Hebelverhältnisse, der Ausnehmung 18, der Gewindespindel 16 und der Gewindebohrung 20 sind nicht auf die in Fig. 1 dargestellte Ausführungsform beschränkt. Sie können an den Einsatzzweck und einzuhaltende Sicherheitsbestimmungen angepasst werden. So würde sich beispielsweise ein Verhältnis der Hebellängen I₁ < I2 bevorzugt für Systeme eigenen, welche eine schnelle Klemmwirkung benötigen, da bereits eine kleine und schnell zu erzielende Aufweitung der oberen Schenkel 10a, 10b zu einer ausreichenden Verschiebung der unteren Schenkel 4a, 4b in Richtung der Führungsschiene 6 führt. Ist dagegen eine besonders hohe Klemmkraft erforderlich, so ist ein Verhältnis der Hebellängen I₁ < I₂ zu bevorzugen, damit durch die Hebelwirkung eine Kraftverstärkung erfolgt.

Auch über das Gewindeprofil der Gewindespindel 16 und der Gewindebohrung 20 kann eine Kraftverstärkung erfolgen. Diese sind daher derart ausgestaltet, dass eine dem Einsatzzweck optimierte Kraftübertragung der Drehbewegung des Hebels 14 auf die oberen Schenkel 10a, 10b erfolgt. Auch bei der Wahl der Ausnehmung 18 sind unterschiedliche Lagervariationen, wie beispielsweise Raststücke oder Bundbohrbuchsen, denkbar.

Zur Befestigung von Werkstücken oder Werkzeugen verfügt die Klemmvorrichtung 1 nach Fig. 2 über Befestigungselemente 22, die zwischen den oberen Schenkeln 10a, 10b angeordnet sind. Hierbei kommt die kompakte Bauweise der Klemmvorrichtung 1 zum Tragen, da direkt mit Abschluss der oberen Schenkel 10a, 10b das Werkstück oder das Werkzeug anschließen kann. Ein zusätzlicher Platz für eine Auslöseeinheit oder etwas ähnlichem wird nicht benötigt. Durch die Verwendung einer Gewindespindel 16 zur Kraftübertragung können die oberen Schenkel 10a, 10b darüber hinaus relativ kurz gehalten werden. Insbesondere durch den einfach gehaltenen Aufbau der Klemmvorrichtung 1 ist eine Anwendung bei kleinsten Führungsschienen 6 möglich.

Die Klemmvorrichtung 1 nach Fig. 1 und Fig. 2 ist weiterhin als aktives Klemmsystem ausgestaltet. Dies bedeutet, dass die Klemmwirkung nur durch Betätigung des Hebels 14 ausgelöst wird. Die Klemmvorrichtung 1 ist daher im ruhenden, normalen Zustand offen und die Klemm- bzw. Bremsbeläge haben keinen reibschlüssigen Kontakt zu der Führungsschiene 6.

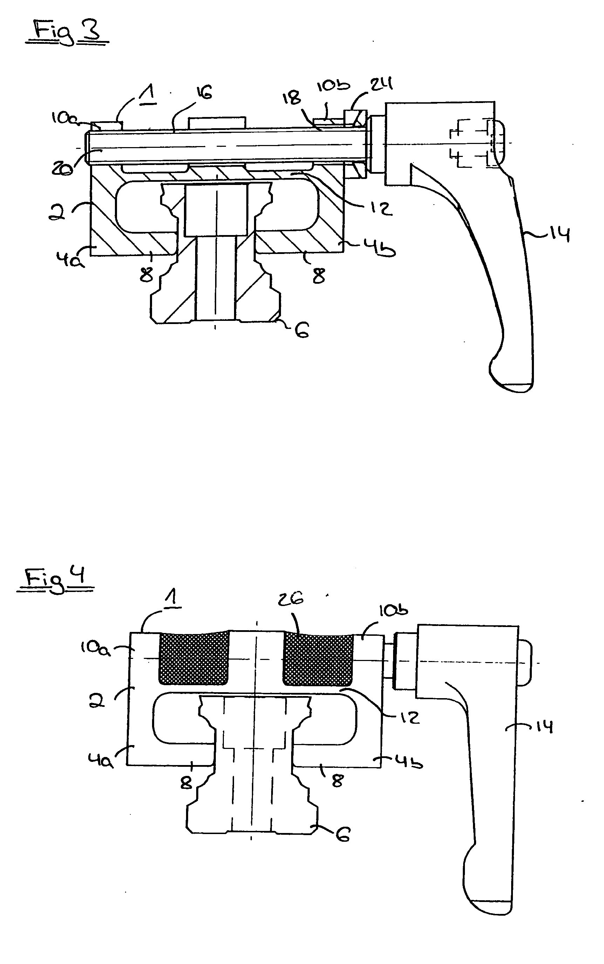

Die Klemmvorrichtung 1 nach Fig. 3 ist dagegen als passives Klemmsystem ausgestaltet. Der Hebel 14 ist daher in diesem System dazu ausgelegt, die im normalen Zustand der Klemmvorrichtung 1 existierende Klemmwirkung zu lösen. Dazu ist der Hebel 14 nicht wie bei der Klemmvorrichtung 1 nach Fig. 1 und Fig. 2 auf der Seite der Gewindebohrung 20 angeordnet, sondern auf der Seite der Ausnehmung 18. Diese ist hier ebenfalls als durchgängige Bohrung ausgeführt und verfügt über eine Kugelscheibe mit Kegelpfanne als Abstützelement 24. Dieses Abstützelement 24 und die gegenüberliegende Gewindebohrung 20 führt dazu, dass eine Drehbewegung des Hebels 14 und eine damit gekoppelte Drehbewegung der Gewindespindel 16 in eine parallel zur Längsachse der Gewindespindel gerichtete Kraftkomponente auf die beiden Schenkel umgesetzt wird. Diese Kraftkomponenten auf die beiden oberen Schenkel 10a, 10b sind aber - im Gegensatz zu der Klemmvorrichtung nach Fig. 1 und Fig. 2 - einander zugewandt, sodass die oberen Schenkel 10a, 10b zueinander gedrückt werden. Dies resultiert in einer Aufweitung der unteren Schenkel 4a, 4b und damit zu einem Öffnen der Klemmvorrichtung.

Die in der Ruhestellung der Klemmvorrichtung 1 vorhandene Klemmwirkung kann durch eine gezielte Verformung der Klemmvorrichtung 1 aber auch durch zwischen den oberen Schenkeln 10a, 10b angebrachte Federelemente 26 erzeugt werden. Diese Federelemente 26 können handelsübliche vorgespannte Federn sein, eine Füllung des Zwischenraumes der beiden oberen Schenkel 10a, 10b durch ein Elastomer, wie es in Fig. 4 dargestellt ist, ist aber ebenfalls denkbar.

## Patentansprüche

1. Klemmvorrichtung (1) für Führungsschienen oder Führungsstangen (6) mit einem im wesentlichen H-förmigen Grundkörper (2), dessen im wesentlichen parallele Schenkel durch einen flexiblen Mittelsteg (12) verbunden sind, wobei die zu einer ersten Seite des Mittelstegs (12) ausgerichteten unteren Schenkel (4a, 4b) zur unmittelbaren oder mittelbaren Einleitung einer Brems- oder Klemmkraft an der Führungsschiene (6) ausgelegt sind, **dadurch gekennzeichnet, dass** einer der auf der entgegengesetzten zweiten Seite des Mittelstegs (6) ausgerichteten oberen Schenkel (10b) über wenigstens eine Gewindebohrung (20) verfügt, in die je eine Gewindespindel (16) eingreift und dass die Gewindespindel (16) in einer Ausnehmung (18) des gegenüberliegenden, oberen Schenkels (10a) drehbar gelagert ist.

2. Klemmvorrichtung (1) für Führungsschienen oder Führungsstangen (6) nach Anspruch 1, **dadurch gekennzeichnet, dass** die Gewindeprofile der Gewindebohrung (20) und der Gewindespindel (16) zur Kraftverstärkung ausgelegt sind.

3. Klemmvorrichtung (1) für Führungsschienen oder Führungsstangen (6) nach einem der Ansprüche 1 oder 2, **dadurch gekennzeichnet, dass** für die Drehbewegung der Gewindespindel (16) ein manuell bedienbarer mechanischer Antrieb(14) vorgesehen ist.

4. Klemmvorrichtung (1) für Führungsschienen oder Führungsstangen (6) nach einem der Ansprüche 1 oder 2, **dadurch gekennzeichnet, dass** für die Drehbewegung der Gewindespindel (16) ein elektro-motorischer Antrieb vorgesehen ist.

5. Klemmvorrichtung (1) für Führungsschienen oder Führungsstangen (6) nach einem der Ansprüche 1 oder 2, **dadurch gekennzeichnet, dass** für die Drehbewegung der Gewindespindel (16) ein pneumatischer oder hydraulischer Antrieb vorgesehen ist.
